# EUROPÄISCHE PATENTSCHRIFT

(11) **EP 3 654 502 B1**
(45) Veröffentlichungstag und Bekanntmachung des Hinweises auf die Patenterteilung: **28.06.2023**
(21) Anmeldenummer: 19208156.0
(22) Anmeldetag: 08.11.2019
(51) Int. Cl.: H02K 15/06

(54) **VERFAHREN UND VORRICHTUNG ZUM HERSTELLEN EINER ANORDNUNG MIT EINEM GENUTETEN WICKLUNGSTRÄGER UND EINER SPULENWICKLUNG FÜR EINE ELEKTRISCHE MASCHINE**
METHOD AND DEVICE FOR PRODUCING AN ARRANGEMENT WITH A GROOVED WINDING CARRIER AND A WINDING FOR AN ELECTRIC MACHINE
PROCÉDÉ ET DISPOSITIF DE FABRICATION D'UN AGENCEMENT DOTÉ D'UN SUPPORT D'ENROULEMENT RAINURÉ ET UN ENROULEMENT DE BOBINE POUR UNE MACHINE ÉLECTRIQUE

(30) Priorität: 13.11.2018 DE 102018128436
(43) Veröffentlichungstag der Anmeldung: 20.05.2020
(73) Patentinhaber: Aumann Espelkamp GmbH, 32339 Espelkamp (DE)
(72) Erfinder: WEIßE, Lando, 10717 Berlin (DE); LÜTTGE, Wolfgang, 31787 Hameln (DE); DUNKER, Alexander, 32351 Stemwede-Drohne (DE); SELL-LE BLANC, Florian, 76185 Karlsruhe (DE); HALWAS, Maximilian, 76131 Karlsruhe (DE); FLEISCHER, Jürgen, 76228 Karlsruhe (DE)
(74) Vertreter: Bittner, Thomas L.

(56) Entgegenhaltungen:
- FR-A1- 2 896 352
- US-A- 2 272 263
- US-A- 2 424 752
- US-A- 2 829 428
- US-A1- 2014 201 979
- US-A1- 2017 141 660

## Beschreibung

Die Erfindung betrifft ein Verfahren und eine Vorrichtung zum Herstellen einer Anordnung mit einem genuteten Wicklungsträger und einer Spulenwicklung für eine elektrische Maschine.

### Hintergrund

Statoren und Rotoren für elektrische Maschinen weisen üblicherweise einen genuteten Wicklungsträger auf, der auch als genutetes Blechpakt bezeichnet wird und regelmäßig eine zylindrische Form hat. An dem Wicklungsträger sind Nuten vorgesehen, die der Aufnahme von Spulenelementen für eine Spulenwicklung dienen. Bei der Fertigung einer solchen Anordnung mit genutetem Wicklungsträger werden Fertigungswerkzeuge genutzt, um die Spulenelemente in zugeordnete Nuten des genuteten Wicklungsträgers anzuordnen oder einzubringen.

Dokument DE 11 2016 000 469 T5 beschreibt ein Stator-Herstellungs-Gerät mit einem Einsetz-Werkzeug, einem Press-Werkzeug, einem Paar von Formungs-Werkzeugen und einer Formungs-Werkzeug-Bewegungseinheit. Das Press-Werkzeug wird zum Einbringen von Spulenelementen in den Nuten eines Statorkerns relativ zum genuteten Statorkern und zu den Spulenelementen in axialer Richtung verlagert. Das Press-Werkzeug weist plattenartige Drücker auf, die beim axialen Verlagern des Press-Werkzeugs gegen die Spulenelemente drücken, um diese in die Nuten des Statorkerns zu verlagern. Um mittels der Axialbewegung des Press-Werkzeugs diese Verlagerung zu erreichen, ist das Press-Werkzeug in der Spitze sich verjüngend ausgebildet, sodass hierdurch entstehende Schrägflächen auf den Spulenelementen entlanggleiten und so deren Verlagerung in Radialrichtung zu der zugeordneten Nut hin bewirken.

Das Dokument US 2014/201979 A1 offenbart eine Herstellungsvorrichtung für einen Stator einer rotierenden elektrischen Maschine, die eine Spannvorrichtung, einen Stützabschnitt, Verbindungsmechanismen und Druckabschnitte umfasst. Die Spannvorrichtung hat Halterillen, in die jeweils lineare Teile der Spulen eingeführt werden können. Die Spannvorrichtung kann an der Innenseite eines Statorkerns angeordnet sein, während die Nuten jeweils den Öffnungen der Schlitze zugewandt sind. Jeder der Verbindungsmechanismen hat ein Ausschiebe-Element und eine Verbindung. Die Verbindung bewegt ein entsprechendes ein Ausschiebe-Element in einer Richtung vom unteren Abschnitt der Halterille zu einem entsprechenden Schlitz und in einer Richtung vom Schlitz zum unteren Abschnitt. Die ein Ausschiebe-Elemente können gleichzeitig aus der axialen Richtung des Statorkerns synchron mit den Verbindungsmechanismen eine Druckkraft auf alle Spulenenden der Spulen ausüben.

In dem Dokument US 2,829,428 A ist ein Einfügekopf für Maschinen für das Einfügen von Statorspulen in Maschinen beschrieben. Mit dem Einfügekopf soll ermöglicht werden, mit nur einer Maschine für das Einfügen von Statorspulen Spulen in Statoren mit innerhalb weiter Grenzen unterschiedlichen Durchmessern und Längen einzufügen.

Das Dokument FR 2 896 352 A1 betrifft eine Vorrichtung zum Übertragen einer Wicklung eines Stators einer rotierenden elektrischen Maschine, der auf einem ringförmigen Träger montiert ist, auf eine Packung von Blechen des Stators.

### Zusammenfassung

Aufgabe der Erfindung ist es, ein Verfahren und eine Vorrichtung zum Herstellen einer Anordnung mit einem genuteten Wicklungsträger und einer Spulenwicklung für eine elektrische Maschine anzugeben, die einen verbesserten Fertigungsprozess hinsichtlich des Anordnens von Spulenelementen der Spulenwicklung in die Nuten des Wicklungsträgers ermöglichen.

Zur Lösung sind ein Verfahren und eine Vorrichtung zum Herstellen einer Anordnung mit einem genuteten Wicklungsträger und einer Spulenwicklung für eine elektrische Maschine nach den unabhängigen Ansprüchen geschaffen. Ausgestaltungen sind Gegenstand von abhängigen Unteransprüchen.

Mithilfe der vorgeschlagenen Technologie, ist es auf einfache und effiziente Art und Weise ermöglicht, die Spulenelemente in die jeweils zugeordnete Nut hinein zu verlagern, sodass das Spulenelement zumindest abschnittsweise innerhalb der Nut angeordnet ist. Im Bereich der Nut ist der darin angeordnete Abschnitt des Spulenelements mittels einer Nutisolierung gegenüber dem genuteten Wicklungsträger elektrisch isoliert. Das Herstellen und das Ausbilden einer solchen Nutisolierung ist als solches in verschiedenen Ausführungsformen bekannt. Beispielsweise können die Spulenelemente bereits vor dem Einbringen in der zugeordneten Nut des genuteten Wicklungsträgers mit einer Nutisolierung versehen werden. Alternativ oder ergänzend kann das Einbringen einer Nutisolierung in der Nut vor dem Einbringen des Spulenelements vorgesehen sein. Die Aufrecht- oder Beibehaltung der flächigen Anlage zwischen dem Spulenelement und der Transfereinrichtung vermeidet ein Verkippen des Spulenelements beim Verlagern in die Nut und unterstützt so eine möglichst problemfreie Einbringung des Spulenelements in der Nut.

Ist die Axialrichtung des genuteten Wicklungsträgers vertikal ausgerichtet, so erstreckt sich die Kontaktfläche aufrecht stehend oder in vertikaler Richtung.

Beim Verlagern aus der Ausgangsstellung in die Nut hinein kann das Spulenelement nach dem Ausbilden der flächigen Anlage mit der Transfereinrichtung ausschließlich in Radialrichtung bewegt werden.

Die Transfereinrichtung bildet ein Zwischen- oder Übertragungswerkzeug zwischen dem zu verlagernden Spulenelement und der Betätigungseinrichtung. Die Betätigungseinrichtung wird zum Verlagern des Spulenelements in die Nut, also zunächst zum Ausbilden der flächigen Anlage, mit der Transfereinrichtung gekoppelt. Vorher sind die Betätigungseinrichtung und die Transfereinrichtung voneinander entkoppelt. Eine solche Entkopplung ist auch (wieder) vorgesehen, nachdem das Verlagern des Spulenelements in die Nut abgeschlossen ist. Hierzu wird die Betätigungseinrichtung von der Transfereinrichtung entkoppelt und zurückgestellt. Die Betätigungseinrichtung ist eingerichtet, die Transfereinrichtung nach dem Einbringen des Spulenelements in der Nut wieder zurückzustellen, um die Transfereinrichtung von dem Spulenelement zu lösen.

Das Ausbilden Kontaktfläche zur flächigen Anlage der Transfereinrichtung an dem Spulenelement kann über einen Teil oder die Gesamtlänge eines Seitenarms des Spulenelements ausgebildet werden. In verschiedenen Ausführungsformen können die Spulenelemente als stabförmige Spulenelemente ausgeführt sein, bei denen stabförmige Seitenarme im Kopfbereich mittels eines U- oder V-förmigen Abschnitts verbunden sind. Die Spulenelemente können als sogenannte Hairpins, I-Pins oder ausgeführt sein.

Die Transfereinrichtung(en) können mit einem I-Schieber, einem T-Schieber oder einem Stufenschieber gebildet sein.

Die Anlagefläche kann zumindest teilweise im Bereich einer an der Transfereinrichtung vorgesehenen Führung ausgebildet werden, die wenigstens abschnittsweise auf der Druckfläche angeordnet ist. Der flächige Kontakt zwischen der Transfereinrichtung und dem Spulenelement kann teilweise oder ausschließlich im Bereich der Führung an der Transfereinrichtung ausgebildet sein. Die Führung an der Transfereinrichtung kann in Axialrichtung verlaufende Oberflächenstrukturierungen umfassen, beispielsweise eine Vertiefung, zum Beispiel in Form einer Rille, oder einen Vorsprung.

Die Transfereinrichtungen können für die Spulenelemente simultan betätigt werden, so dass die Spulenelemente simultan in die jeweils zugeordnete Nut verlagert werden. Auf diese Weise werden mehrere oder alle Spulenelemente gleichzeitig aus der jeweiligen Ausgangsstellung in die montierte Stellung verlagert, in welcher das Spulenelement ganz oder teilweise in der zugeordneten Nut des genuteten Wicklungsträgers angeordnet ist.

Die Spulenelemente können beim Anordnen in der Ausgangsstellung in einem Innenraum des genuteten Wicklungsträgers jeweils gegenüber einer innenliegenden Nut des genuteten Wicklungsträgers angeordnet werden. Der genutete Wicklungsträger kann eine zylindrische Form aufweisen. Die innenliegenden Nuten können umlaufend durchgehend und voneinander beabstandet ausgebildet sein. Das Einbringen eines oder mehrerer Spulenelemente in die zugeordneten Nuten kann simultan ausgeführt werden.

Die Betätigungseinrichtung kann die Transfereinrichtung zum Verlagern auf gegenüberliegenden Seiten in Bezug auf die Kontaktfläche simultan kontaktieren und mit einer Betätigungskraft beaufschlagen. Das simultane Kontaktieren und Beaufschlagen der Betätigungskraft kann ein Verkippen der Kontaktfläche in eine Schräglage unterbinden oder diesem entgegenwirken. Es ist ein simultanes Einschieben der Spulenelemente in die zugeordnete Nut ermöglicht. Das simultane Kontaktieren auf den gegenüberliegenden Seiten kann oberhalb und unterhalb des genuteten Wicklungsträgers ausgeführt werden. Bei dieser oder anderen Ausführungsformen kann die Betätigungskraft als Druck- oder Zugkraft auf die Transfereinrichtung eingeleitet werden. Diese Ausgestaltung kann auch vorgesehen sein, wenn an der Transfereinrichtung nur ein einseitiges Kontaktieren vorgesehen ist.

Die Transfereinrichtung kann zumindest entlang eines Teils eines Verlagerungsweges, welchen die Transfereinrichtung beim Verlagern mittels der Betätigungseinrichtung ausführt, in einer zugeordneten Werkzeugführung geführt werden. Die Werkzeugführung kann außerhalb und / oder innerhalb des Innenraums des genuteten Wicklungsträgers angeordnet sein. Beispielsweise können Führungselemente der Werkzeugführung oberhalb und / oder unterhalb des genuteten Wicklungsträgers angeordnet sein. Die Werkzeugführung kann eine oder mehrere Schlitzführungen für die Transfereinrichtung aufweisen.

Bei der Betätigungseinrichtung wird zum Verlagern der Transfereinrichtung ein Hebelmechanismus mit relativ zueinander verlagerbaren Hebelarmen betätigt, so dass ein Kopplungselement an einem der Hebelarme, welches an die die Spulenelemente verlagernde Transfereinrichtung koppelt, zwischen einer Ausgangsstellung und einer Endstellung verlagert wird, so dass die Transfereinrichtung in der Radialrichtung verlagert wird. Der Hebelmechanismus kann mit einem Kniehebelmechanismus gebildet sein. Hebelarme des Hebelmechanismus können ein- oder beidseitig des genuteten Wicklungsträgers angeordnet sein, beispielsweise ober- und / oder unterhalb des Statorkerns. Ist der Hebelmechanismus mit entsprechenden Hebelarmen beidseitig ausgebildet, können die Transfereinrichtungen in Bezug auf die Kontaktfläche auf gegenüberliegenden Seiten simultan kontaktiert und betätigt werden. Es ist vorgesehen, dass mithilfe des Hebelmechanismus für die Transfereinrichtungen eine Zugbewegung in radialer Richtung auf die Nuten des genuteten Wicklungsträgers zu ausgeführt wird. Die Kopplungselemente dienen zum Ankoppeln an die oder zum Verbinden mit der Transfereinrichtung, um die mittels des Hebelmechanismus bereitgestellte Betätigungskraft auf diese einzuleiten.

Nach dem Anordnen der Spulenelemente in den Nuten kann eine Kopfformung ein- oder beidseitig des Startorkerns ausgeführt werden. Bei der Kopfformung kann vorgesehen sein, die Kopfenden der Spulenelemente für die Spulenwicklung in eine Vorzugsrichtung zu biegen. Die Kopfformung kann mit einem Formungswerkzeug ausgeführt werden, welches auf die Kopfenden auf einer oder beider Stirnseiten des genuteten Wicklungsträgers einwirkt. Die Kopfformung kann ausgeführt werden, während die Spulenelemente noch an der Transfereinrichtung anliegen, welche hierdurch eine wahlweise ergänzende Stützung der Spulenelemente während der Kopfformung bereitstellen kann.

Beim Einbringen der Spulenelemente in den Nuten kann vorgesehen sein, dass nach dem Einbringen mit Hilfe der Transfereinrichtungen nachgedrückt oder nachgepresst wird, um die Wicklung in der Nut zu komprimieren.

Im Zusammenhang mit der Vorrichtung zum Herstellen einer Anordnung mit einem genuteten Wicklungsträger und einer Spulenwicklung für eine elektrische Maschine können die vorangehend in Verbindung mit dem Verfahren erläuterten Ausgestaltungen entsprechend vorgesehen sein.

Nach dem Herstellen der Anordnung mit genutetem Wicklungsträger und Spulenwicklung kann dieses zum Herstellen eines Rotors oder eines Stators für eine elektrische Maschine verwendet werden.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung zum Einbringen von Spulenelementen in Nuten eines genuteten Wicklungsträgers mittels eines Hebelmechanismus in einer Ausgangsstellung der Spulenelemente;
- Fig. 2: eine schematische Darstellung der Anordnung aus Fig. 1, wobei die Betätigungseinrichtung an eine Transfereinrichtung koppelt;
- Fig. 3: eine schematische Darstellung der Anordnung aus Fig. 1, wobei die Spulenelemente in die Nuten des genuteten Wicklungsträgers hineinverlagert sind;
- Fig. 4: eine schematische Darstellung der Anordnung aus Fig. 1, wobei Betätigungseinrichtung zurückgestellt ist;
- Fig. 5: eine perspektivische schematische Darstellung einer Anordnung eines genuteten Wicklungsträgers mit den Nuten jeweils zugeordneten Transfereinrichtungen und
- Fig. 6: eine schematische perspektivische Darstellung der Anordnung aus Fig. 5, wobei die Transfereinrichtungen weiter in die Nuten hinein verlagert sind.

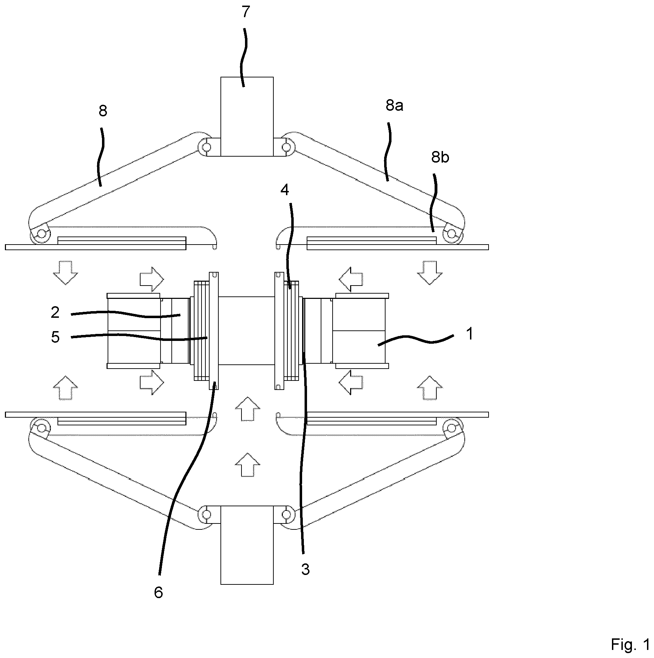

Fig. 1 zeigt eine schematische Darstellung einer Anordnung mit einer Werkstückaufnahme 1, an der ein genuteter Wicklungsträger 2 aufgenommen ist. Der genutete Wicklungsträger 2 ist bei der gezeigten Ausführungsform zylindrisch ausgeführt mit einem kreisförmigen Querschnitt und weist innenliegende Nuten 3 auf, in die Spulenelemente 4 für eine an dem genuteten Wicklungsträger 2 auszubildende Spulenwicklung eingebracht werden sollen.

Gemäß Fig. 1 kommen die Spulenelemente 4 im Bereich einer sich in Axialrichtung des genuteten Wicklungsträgers 2 erstreckenden Kontaktfläche 5 an einer Transfereinrichtung 6 flächig zur Anlage. In der in Fig. 1 gezeigten Darstellung ist die Kontaktfläche 5 vertikal ausgerichtet. Den in der jeweiligen Nut 3 einzubringenden Spulenelementen 4 ist jeweils eine Transfereinrichtung 6 zugeordnet. In der Darstellung in Fig. 1 ist die flächige Anlage ausgebildet, nach dem die Transfereinrichtung 6 auf die Spulenelemente 3 zugestellt wurde.

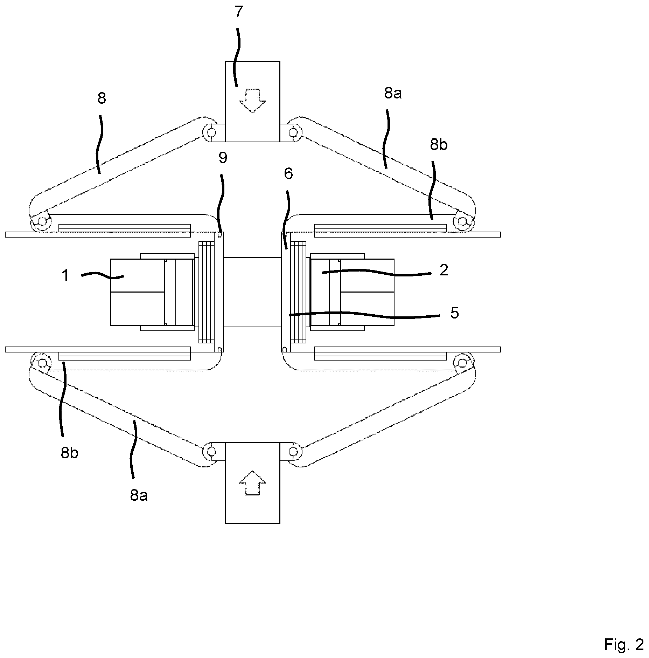

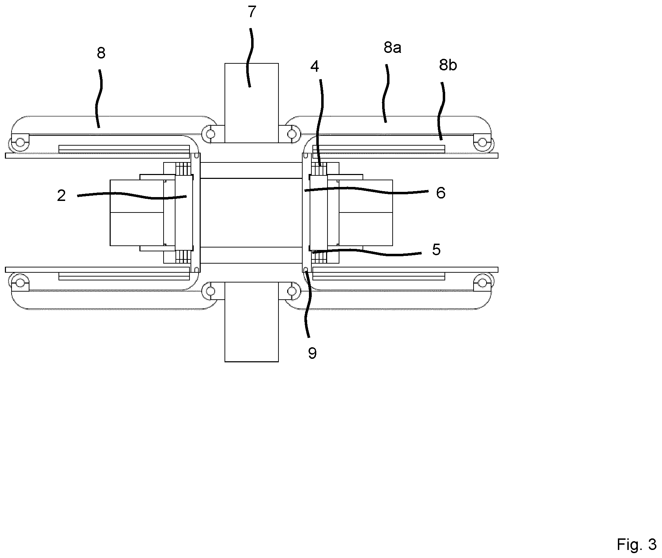

Es ist eine Betätigungseinrichtung 7 vorgesehen, die bei der Ausgestaltung in Fig. 1 einen Hebelmechanismus 8 mit Hebelarmen 8a, 8b oberhalb und unterhalb des genuteten Wicklungsträgers 2 aufweist. Die Betätigungseinrichtung 7 ist eingerichtet, an die Transfereinrichtung 6 zu koppeln, um diese unter Beibehaltung der flächigen Anlage zu dem Spulenelement 4 in Radialrichtung (horizontal in Fig. 1) zu bewegen, um so die Spulenelemente 4 in die zugeordnete Nut 3 einzubringen. Um dies auszuführen, werden gemäß Fig. 2 Kopplungselemente 9 an dem Hebelarm 8b mit der Transfereinrichtung 6 gekoppelt. Bei der gezeigten Ausführungsform erfolgt dies oberhalb und unterhalb des genuteten Wicklungsträgers 2, beispielswiese simultan. Sodann wird der Hebelmechanismus 8 mittels der Betätigungseinrichtung 7 betätigt, was Fig. 3 zeigt, um die Transfereinrichtung 6 nach radial außen zu verlagern und so die Spulenelemente 4 in der zugeordneten Nut 3 einzubringen.

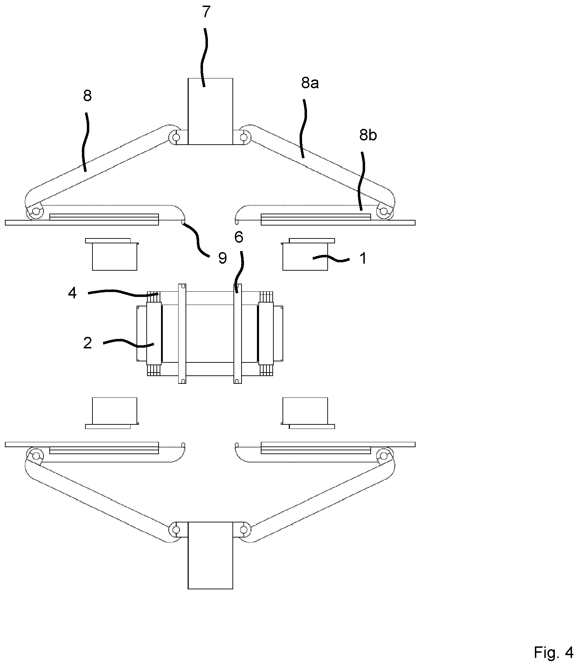

Danach kann die Betätigungseinrichtung 7 mit dem Hebelmechanismus 8 zurückgestellt werden (vgl. Fig. 4), um anschließend den genuteten Wicklungsträger 2 mit den hieran angeordneten Spulenelementen 4 für eine Spulenwicklung von der Werkstückaufnahme 1 zu lösen.

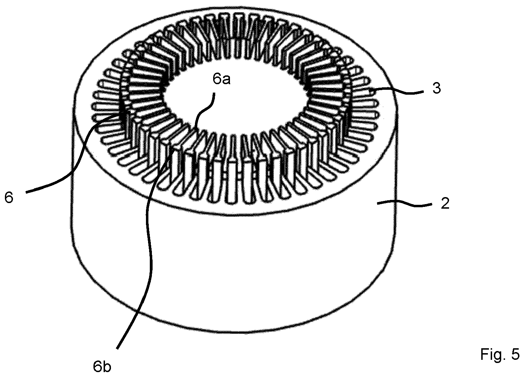

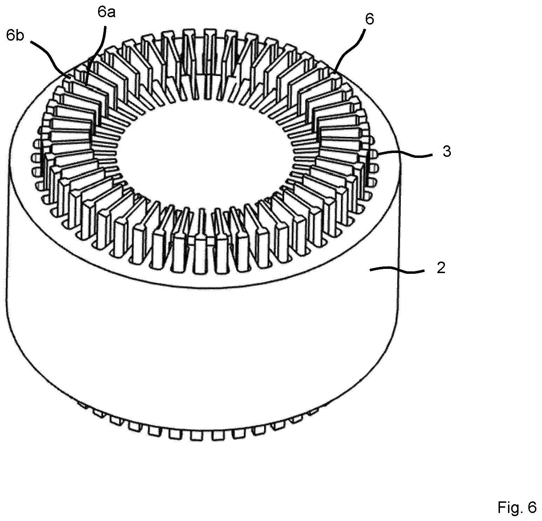

Die Fig. 5 und 6 zeigen eine schematische perspektivische Darstellung einer Anordnung mit dem genuteten Wicklungsträger 2 sowie den Nuten 3 jeweils zugeordneten Transfereinrichtungen 6, die zum Einbringen der Spulenelemente (nicht dargestellt) in den Nuten 3 in radialer Richtung verlagert werden. Gemäß dem Beispiel in den Fig. 5 und 6 haben die Transfereinrichtungen 6 eine sich in radialer Richtung verändernde Breite, wobei radial innenliegende Abschnitte 6a schmaler sind als ein radial außenliegender Abschnitt 6b. Auf diese Weise kann beispielsweise die Form eines Stempels oder T-Schiebers bereitgestellt sein, wobei der radial außenliegende Abschnitt 6b eine Negativform eines zugeordneten Abschnitts der Nuten 3 aufweisen kann.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein, im Rahmen der Erfindung, die durch den Ansprüchen definiert ist.

## Patentansprüche

1. Verfahren zum Herstellen einer Anordnung mit einem genuteten Wicklungsträger (2) und einer Spulenwicklung für eine elektrische Maschine, mit den folgenden Schritten:
- Anordnen eines genuteten Wicklungsträgers (2) mit Nuten (3) zum jeweiligen Aufnehmen eines Spulenelementes (4) einer Spulenwicklung am genuteten Wicklungsträger (2) in einer Werkstückaufnahme (1) einer Fertigungsvorrichtung;
- Anordnen von Spulenelementen (4) in einer Ausgangsstellung vor einer jeweils zugeordneten Nut (3) des genuteten Wicklungsträgers (2), in welcher das Spulenelement (4) der Nut (3) in Radialrichtung gegenüberliegend angeordnet ist;
- Kopplung einer Betätigungseinrichtung (7) an eine Transfereinrichtung (6);
- Verlagern der Spulenelemente (4) aus der Ausgangsstellung in eine montierte Stellung, in welcher das Spulenelement (4) in der jeweils zugeordneten Nut (3) angeordnet ist, und
- Entkopplung der Betätigungseinrichtung (7) von der Transfereinrichtung (6) und Zurückstellung der Betätigungseinrichtung (7);
wobei für die Spulelenelemente (4) hierbei jeweils Folgendes vorgesehen ist:
- Zustellen der Transfereinrichtung (6) auf das Spulenelement (4), derart, dass das Spulenelement (4) und eine Druckfläche der Transfereinrichtung (6) in einer sich in Axialrichtung des genuteten Wicklungsträgers (2) erstreckenden Kontaktfläche (5) flächig zur Anlage kommen; und
- Verlagern der Transfereinrichtung (6) mittels der Betätigungseinrichtung (7), welche die Transfereinrichtung (6) unter Beibehaltung der flächigen Anlage in Radialrichtung verlagert, so dass das Spulenelement (4) in die zugeordnete Nut (3) verlagert wird,
wobei bei der Betätigungseinrichtung (7) zum Verlagern der Transfereinrichtung (6) ein Hebelmechanismus (8) mit relativ zueinander verlagerbaren Hebelarmen (8a, 8b) betätigt wird, so dass
- ein Kopplungselement (9) an einem der Hebelarme an die die Spulenelemente (4) verlagernde Transfereinrichtung (6) koppelt, wobei vorher die Betätigungseinrichtung (7) und die Transfereinrichtung (6) voneinander entkoppelt sind;
- das Kopplungselement (9) zwischen einer Ausgangsstellung und einer Endstellung verlagert wird, so dass die Transfereinrichtung (6) in Radialrichtung verlagert wird; und
- die Betätigungseinrichtung (7) von der Transfereinrichtung (6) entkoppelt und zurückgestellt wird, um anschließend den genuteten Wicklungsträger (2) mit den hieran angeordneten Spulenelementen (4) für die Spulenwicklung von der Werkstückaufnahme (1) zu lösen.

2. Verfahren nach Anspruch 1, **dadurch gekennzeichnet, dass** die Kontaktfläche (5) zumindest teilweise im Bereich einer an der Transfereinrichtung (6) vorgesehenen Führung ausgebildet wird, die wenigstens abschnittsweise auf der Druckfläche angeordnet ist.

3. Verfahren nach Anspruch 1 oder 2, **dadurch gekennzeichnet, dass** die Transfereinrichtungen (6) für die Spulenelemente (4) simultan betätigt werden, so dass die Spulenelemente (4) simultan in die jeweils zugeordnete Nut (3) verlagert werden.

4. Verfahren nach mindestens einem der vorangehenden Ansprüche, **dadurch gekennzeichnet, dass** die Spulenelemente (4) beim Anordnen in der Ausgangsstellung in einem Innenraum des genuteten Wicklungsträgers (2) jeweils gegenüber einer innenliegenden Nut des genuteten Wicklungsträgers (2) angeordnet werden.

5. Verfahren nach mindestens einem der vorangehenden Ansprüche, **dadurch gekennzeichnet, dass** die Betätigungseinrichtung (7) zum Verlagern der Transfereinrichtung (6) eine Rotationsbewegung ausführt.

6. Verfahren nach mindestens einem der vorangehenden Ansprüche, **dadurch gekennzeichnet, dass** die Betätigungseinrichtung (7) die Transfereinrichtung (6) zum Verlagern auf gegenüberliegenden Seiten in Bezug auf die Kontaktfläche (5) simultan kontaktiert und mit einer Betätigungskraft beaufschlagt.

7. Verfahren nach mindestens einem der vorangehenden Ansprüche, dadurch g e-**kennzeichnet**, dass die Transfereinrichtung (6) zumindest entlang eines Teils eines Verlagerungsweges, welchen die Transfereinrichtung (6) beim Verlagern mittels der Betätigungseinrichtung (7) ausführt, in einer zugeordneten Werkzeugführung geführt wird.

8. Verfahren nach mindestens einem der vorangehenden Ansprüche, **dadurch gekennzeichnet, dass** nach dem Anordnen der Spulenelemente (4) in den Nuten (3) eine Kopfformung ein- oder beidseitig des genuteten Wicklungsträgers (2) ausgeführt wird.

9. Vorrichtung zum Herstellen einer Anordnung mit einem genuteten Wicklungsträger (2) und einer Spulenwicklung für eine elektrische Maschine, mit:
- einer Werkstückaufnahme (1), die eingerichtet ist, einen genuteten Wicklungsträger (2) mit Nuten (3) zum jeweiligen Aufnehmen eines Spulenelementes (4) einer Spulenwicklung am genuteten Wicklungsträger (2) aufzunehmen;
- einer Zustelleinrichtung, die eingerichtet ist, Spulenelemente (4) in einer Ausgangsstellung vor einer jeweils zugeordneten Nut (3) des genuteten Wicklungsträgers (2) anzuordnen, in welcher das Spulenelement (4) der Nut (3) in Radialrichtung gegenüberliegend angeordnet ist; und
- einer Montageeinrichtung, die eingerichtet ist, die Spulenelemente (4) aus der Ausgangsstellung in eine montierte Stellung zu verlagern, in welcher das Spulenelement (4) in der jeweils zugeordneten Nut (3) angeordnet ist, wobei die Montageeinrichtung weiterhin Folgendes aufweist:
- eine Transfereinrichtung (6), die eingerichtet ist, auf das Spulelenelement (4) zugestellt zu werden, derart, dass das Spulenelement (4) und eine Druckfläche der Transfereinrichtung (6) in einer sich in Axialrichtung des genuteten Wicklungsträgers (2) erstreckenden Kontaktfläche (5) flächig zur Anlage kommen; und
- eine Betätigungseinrichtung (7), die eingerichtet ist, die Transfereinrichtung (6) unter Beibehaltung der flächigen Anlage in Radialrichtung zu verlagern, so dass das Spulenelement (4) in die zugeordnete Nut (3) verlagert wird, und die einen Hebelmechanismus (8) mit relativ zueinander verlagerbaren Hebelarmen (8a, 8b) aufweist, der eingerichtet ist, zum Verlagern der Transfereinrichtung (6) betätigt zu werden, so dass
- ein Kopplungselement (9) an einem der Hebelarme an die die Spulenelemente (4) verlagernde Transfereinrichtung (6) koppelt, wobei vorher die Betätigungseinrichtung (7) und die Transfereinrichtung (6) voneinander entkoppelt sind;
- das Kopplungselement (9) zwischen einer Ausgangsstellung und einer Endstellung verlagert wird, so dass die Transfereinrichtung (6) in Radialrichtung verlagert wird; und
- die Betätigungseinrichtung (7) von der Transfereinrichtung (6) entkoppelt und zurückgestellt wird, um anschließend den genuteten Wicklungsträger (2) mit den hieran angeordneten Spulenelementen (4) für die Spulenwicklung von der Werkstückaufnahme (1) zu lösen.

## Claims

1. Method for producing an arrangement with a grooved winding support (2) and a coil winding for an electrical machine, comprising the following steps:
- arrangement of a grooved winding support (2) with grooves (3) to respectively receive a coil element (4) of a coil winding on the grooved winding support (2) within a workpiece holder (1) of a manufacturing device;
- arrangement of coil elements (4) in an initial position in front of a respectively assigned groove (3) of the grooved winding support (2), in which the coil element (4) is arranged opposite the groove (3) in the radial direction;
- coupling of an actuating device (7) to a transfer device (6);
- shifting of the coil elements (4) from the initial position into an assembled position in which the coil element (4) is arranged in the respectively assigned groove (3), and
- decoupling of the actuating device (7) from the transfer device (6) and resetting of the actuating device (7),
wherein, for the coil elements (4), the following is hereby respectively provided:
- feeding the transfer device (6) onto the coil element (4) in such a way that the coil element (4) and a pressure surface of the transfer device (6) come to rest flush within a contact surface (5) extending in the axial direction of the grooved winding support (2); and
- shifting of the transfer device (6) by means of the actuating device (7), which shifts the transfer device (6) in the radial direction while maintaining the flat resting position in the radial position in such a way that the coil element (4) is shifted into the assigned groove (3),
wherein, in the case of the actuating device (7) for displacing the transfer device (6), a lever mechanism (8) with lever arms (8a, 8b) which can be displaced relative to one another is actuated, in such a way that
- a coupling element (9) on one of the lever arms couples with the transfer device (6) shifting the coil elements (4), wherein the actuating device (7) and the transfer device (6) are previously decoupled from one another,
- the coupling element (9) is shifted between an initial position and a final position in such a way that the transfer device (6) is shifted in the radial direction, and
- the actuating device (7) is decoupled from the transfer device (6) and reset in order to then detach the grooved winding support (2) with the coil elements (4) for the coil winding arranged within it from the workpiece holder (1).

2. Method according to Claim 1, **characterized in that** the contact surface (5) is formed at least partially in the area of a guide provided on the transfer device (6), which is arranged on the pressure surface at least in sections.

3. Method according to Claim 1 or 2, **characterized in that** the transfer devices (6) for the coil elements (4) are actuated simultaneously in such a way that the coil elements (4) are simultaneously shifted into the respectively assigned groove (3).

4. Method according to at least one of the preceding claims, **characterized in that** the coil elements (4) are arranged in the initial position in an interior space of the grooved winding support (2) with each being opposite an internal groove of the grooved winding support (2).

5. Method according to at least one of the preceding claims, **characterized in that** the actuating device (7) performs a rotational motion to shift the transfer device (6).

6. Method according to at least one of the preceding claims, **characterized in that** the actuating device (7) simultaneously impinges the transfer device (6) for shifting on opposite sides with respect to the contact surface (5) and applies an actuating force.

7. Method according to at least one of the preceding claims, **characterized in that** the transfer device (6) is guided in an assigned tool guide along at least part of a shifting path which the transfer device (6) carries out by means of the actuating device (7) during shifting.

8. Method according to at least one of the preceding claims, **characterized in that**, after the coil elements (4) have been arranged in the grooves (3), a head shaping is carried out on one or both sides of the grooved winding support (2).

9. Device for making an arrangement with a grooved winding support (2) and a coil winding for an electrical machine, comprising:
- a workpiece holder (1) which is configured to receive a grooved winding support (2) with grooves (3) for respectively receiving a coil element (4) of a coil winding on the grooved winding support (2);
- a feeding device that is configured to arrange coil elements (4) in an initial position in front of an assigned groove (3) of the grooved winding support (2), in which the coil element (4) is arranged opposite the groove (3) in the radial direction; and
- an assembly device which is configured to shift the coil elements (4) from the initial position into an assembled position, in which the coil element (4) is arranged in the respectively assigned groove (3), wherein the assembly device also comprises:
- a transfer device (6) which is configured to be applied to the coil element (4) in such a way that the coil element (4) and a pressure surface of the transfer device (6) come to rest within a contact surface (5) extending in the axial direction of the grooved winding support (2), and
- an actuating device (7) which is configured to shift the transfer device (6) in the radial direction while maintaining the flat resting position in such a way that the coil element (4) is shifted into the assigned groove (3), and which comprises a lever mechanism (8) with lever arms (8a, 8b) that can be shifted relative to one another, which lever mechanism is configured to be actuated to shift the transfer device (6) in such a way that
- a coupling element (9) on one of the lever arms couples with the transfer device (6) shifting the coil elements (4), wherein the actuating device (7) and the transfer device (6) are previously decoupled from one another,
- the coupling element (9) is shifted between an initial position and a final position in such a way that the transfer device (6) is shifted in the radial direction, and
- the actuating device (7) is decoupled from the transfer device (6) and reset in order to then detach the grooved winding support (2) with the coil elements (4) for the coil winding arranged within it from the workpiece holder (1).

## Revendications

1. Procédé, destiné à créer un agencement pourvu d'un support d'enroulement (2) rainuré et d'un enroulement de bobine pour une machine électrique, comportant les étapes suivants :
- placer un support d'enroulement (2) rainuré, pourvu de rainures (3) destiné à recevoir respectivement un élément de bobine (4) d'un enroulement de bobine sur le support d'enroulement (2) rainuré dans un logement (1) de pièce à usiner d'un dispositif d'usinage ;
- placer des éléments de bobine (4) dans une position initiale à l'avant d'une rainure (3) respectivement associée du support d'enroulement (2) rainuré, dans laquelle l'élément de bobine (4) est placé en vis-à-vis de la rainure (3) dans la direction radiale ;
- accoupler un système d'actionnement (7) sur un système de transfert (6) ;
- déplacer les éléments de bobine (4) de la position initiale dans une position de montage, dans laquelle l'élément de bobine (4) est placé dans la rainure (3) associée respective, et
- désaccoupler le système d'actionnement (7) du système de transfert (6) et ramener en arrière le système d'actionnement (7) ;
pour les éléments de bobine (4) étant prévu à cet effet ce qui suit :
- mettre en prise le système de transfert (6) sur l'élément de bobine (4), de telle sorte que l'élément de bobine (4) et une surface de pression du système de transfert (6) viennent se mettre en appui plan sur une surface de contact (5) s'étendant en direction axiale du support d'enroulement (2) rainuré ; et
- déplacer le système de transfert (6) au moyen du système d'actionnement (7) lequel déplace le système de transfert (6) en maintenant l'appui plan dans la direction radiale, de telle sorte que l'élément de bobine (4) soit déplacé dans la rainure (3) associée,
dans lequel, dans le système d'actionnement (7) pour déplacer le système de transfert (6) un mécanisme à levier (8) avec des bras de levier (8a, 8b) déplaçables les uns vers les autres est actionné de telle sorte
- qu'un élément d'accouplement (9) sur l'un des bras de levier s'accouple sur le système de transfert (6) qui déplace les éléments de bobine (4), préalablement, le système d'actionnement (7) et le système de transfert (6) étant désaccouplés l'un de l'autre,
- que l'élément d'accouplement (9) soit déplacé entre une position initiale et une position finale, de telle sorte que le système de transfert (6) soit déplacé dans la direction radiale, et
- que le système d'actionnement (7) soit désaccouplé du système de transfert (6) et soit replacé en arrière, pour désolidariser ensuite le support d'enroulement (2) rainuré des éléments de bobine (4) pour l'enroulement de bobine placés sur celui-ci du logement (1) de pièce à usiner.

2. Procédé selon la revendication 1, **caractérisé en ce que** la surface de contact (5) est conçue au moins partiellement dans la zone d'un guidage prévue sur le système de transfert (6), qui est placée au moins par endroits sur la surface de pression.

3. Procédé selon la revendication 1 ou 2, **caractérisé en ce que** les systèmes de transfert (6) pour les éléments de bobine (4) sont actionnés simultanément, de telle sorte que les éléments de bobine (4) soient déplacés simultanément dans la rainure (3) respectivement associée.

4. Procédé selon au moins l'une quelconque des revendications précédentes, **caractérisé en ce que**, lors de leur déplacement dans la position initiale, les éléments de bobine (4) sont placés dans un espace intérieur du support d'enroulement (2) rainuré, chaque fois au vis-à-vis d'une rainure située à l'intérieur du support d'enroulement (2) rainuré.

5. Procédé selon au moins l'une quelconque des revendications précédentes, **caractérisé en ce que**, pour déplacer le système de transfert (6), le système d'actionnement (7) réalise un déplacement en rotation.

6. Procédé selon au moins l'une quelconque des revendications précédentes, **caractérisé en ce que**, pour le déplacement sur des côtés en vis-à-vis en rapport à la surface de contact (5), le système d'actionnement (7) contacte simultanément le système de transfert (6) et le soumet à une force d'actionnement.

7. Procédé selon au moins l'une quelconque des revendications précédentes, **caractérisé en ce que** le système de transfert (6) est guidé au moins le long d'une partie d'un trajet de déplacement que le système de transfert (6) réalise lors du déplacement au moyen du système d'actionnement (7).

8. Procédé selon au moins l'une quelconque des revendications précédentes, **caractérisé en ce qu'**après le placement des éléments de bobine (4) dans les rainures (3), un formage de tête est réalisé d'un côté ou des deux côtés du support d'enroulement (2) rainuré.

9. Dispositif, destiné à créer un agencement pourvu d'un support d'enroulement (2) rainuré et d'un enroulement de bobine pour une machine électrique, pourvu
- d'un logement (1) de pièce à usiner, qui est aménagé pour recevoir un support d'enroulement (2) rainuré, pourvu de rainures (3), destinées à recevoir respectivement un élément de bobine (4) d'un enroulement de bobine sur le support d'enroulement (2) rainuré,
- d'un système de mise en prise, qui est aménagé pour placer des éléments de bobine (4) dans une position initiale, à l'avant d'une rainure (3) respectivement associée du support d'enroulement (2) rainuré, dans laquelle l'élément de bobine (4) est placé au vis-à-vis de la rainure (3), en direction radiale, et
- d'un système de montage, qui est aménagé pour déplacer les éléments de bobine (4) de la position initiale dans une position montée, dans laquelle l'élément de bobine (4) est placé dans la rainure (3) respectivement associée, le système de montage comportant par ailleurs ce qui suit :
- un système de transfert (6), qui est aménagé pour être mis en prise avec l'élément de bobine (4), de telle sorte que l'élément de bobine (4) et une surface de pression du système de transfert (6) viennent se mettre en appui plan dans une surface de contact (5) s'étendant dans la direction axiale du support d'enroulement (2) rainuré ; et
- un système d'actionnement (7), qui est aménagé pour déplacer le système de transfert (6) dans la direction radiale, en maintenant l'appui plan, de telle sorte que l'élément de bobine (4) soit déplacé dans la rainure (3) associée et qui comporte un mécanisme à leviers (8) avec des bras de levier (8a, 8b) déplaçables les uns par rapport aux autres, qui est aménagé pour être actionné pour déplacer le système de transfert (6), de telle sorte
- qu'un élément d'accouplement (9) s'accouple sur l'un des bras de levier sur le système de transfert (6) déplaçant les éléments de bobine (4), préalablement, le système d'actionnement (7) et le système de transfert (6) étant désaccouplés l'un de l'autre ;
- que l'élément d'accouplement (9) soit déplacé entre une position initiale et une position finale, de sorte que le système de transfert (6) soit déplacé dans la direction radiale ; et
- que le système d'actionnement (7) soit désaccouplé du système de transfert (6) et ramené en arrière, pour désaccoupler par la suite le support d'enroulement (2) rainuré avec les éléments de bobines (4) qui sont placés sur celui-ci pour l'enroulement de bobine du logement (1) de pièce à usiner.
